(19) Europäisches Patentamt
European Patent Office
Office européen des brevets

(11) **EP 4 442 465 A1**

(12) **EUROPÄISCHE PATENTANMELDUNG**

(43) Veröffentlichungstag:
**09.10.2024 Patentblatt 2024/41**

(21) Anmeldenummer: **24166108.1**

(22) Anmeldetag: **26.03.2024**

(51) Internationale Patentklassifikation (IPC):
**B41J 3/407** (2006.01)  **G06F 3/12** (2006.01)
**B41M 5/00** (2006.01)

(52) Gemeinsame Patentklassifikation (CPC):
**B41J 3/40733; B41J 3/4073; G06F 3/12;**
B41M 5/0088

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.04.2023 DE 102023108931**

(71) Anmelder: **Dekron GmbH**
**65779 Kelkheim (Taunus) (DE)**

(72) Erfinder:
• **Spellucci, Thomas**
**65779 Kelkheim (DE)**
• **Eich, Klaus**
**65779 Kelkheim (DE)**
• **Ufer, Frank**
**65779 Kelkheim (DE)**

(74) Vertreter: **Grünecker Patent- und Rechtsanwälte PartG mbB**
**Leopoldstraße 4**
**80802 München (DE)**

(54) **VERFAHREN UND VORRICHTUNG ZUM BEDRUCKEN IRREGULÄRER BEHÄLTER**

(57) Direktdruckverfahren zum Bedrucken eines irregulären Behälters, wobei für einen Pixel einer Druckvorlage für ein Druckbild basierend auf einem Soll- und einem Ist-Durchmesser des zu bedruckenden Behälters ein Pixelversatz bestimmt wird, wobei basierend auf dem bestimmten Pixelversatz eine korrigierte Druckvorlage erzeugt wird, wobei basierend auf der korrigierten Druckvorlage das Druckbild mittels einer Direktdruckvorrichtung mit einer Vielzahl von Druckdüsen auf den irregulären Behälter aufgebracht wird.

FIG. 1

EP 4 442 465 A1

## Beschreibung

Die vorliegende Erfindung betrifft ein Verfahren zum Bedrucken irregulärer Behälter gemäß unabhängigem Anspruch 1 sowie eine Vorrichtung zum Bedrucken irregulärer Behälter gemäß Anspruch 12.

## Stand der Technik

Verfahren und Vorrichtungen zum Bedrucken von irregulären Behältern sind aus dem Stand der Technik bekannt.

Um Verzerrungen eines auf eine irreguläre Behälteroberfläche aufgebrachten Druckbildes zu vermeiden, ist es beispielsweise bekannt, den Ausstoßzeitpunkt von Tintentropfen aus den Druckdüsen einer Direktdruckvorrichtung basierend auf einer Form eines Behälters zu steuern.

Aus der DE 10 2017 215 429 A1 ist ferner ein Direktdruckverfahren für eine Direktdruckmaschine zur Bedruckung von Behältern insbesondere Formbehälter, mit einem Direktdruck bekannt. Im Detail wird aus 3D-Daten der Behälter, einer Druckbewegungsbahn der Direktdruckmaschine und aus Druckparametern der Direktdruckmaschine ein 3D-Druckmodell erstellt, um eine Abbildung einer zu druckenden Druckgrafikvorlage auf die Behälter als Direktdruck vorherzusagen. Mittels des 3D-Druckmodells wird eine makroskopische Korrektur und eine mikroskopische Korrektur bestimmt, wobei die makroskopische Korrektur eine Inverse einer Verzerrung der Druckgrafikvorlage auf den Behältern und die mikroskopische Korrektur eine Düsenkorrektur umfasst. Anschließend wird die Druckgrafikvorlage mit der makroskopischen Korrektur korrigiert und in einer korrigierten Druckgrafik abgelegt, wobei mit einem Rasterbildprozessor aus der korrigierten Druckgrafik ein Druckrasterbild erzeugt wird. Das Druckrasterbild wird dann auf Basis der mikroskopischen Korrektur korrigiert und als korrigiertes Druckrasterbild abgelegt und mit der Direktdruckmaschine als Direktdruck auf die Behälter gedruckt.

Zwar erlaubt dieses Verfahren eine Berücksichtigung der tatsächlichen, gekrümmten Form des Behälters. Jedoch sind die so erstellten Druckbilder hinsichtlich Qualität und Auflösung in einigen Bereichen des Behälters nur bedingt ausreichend.

## Aufgabe

Ausgehend vom bekannten Stand der Technik besteht die zu lösende technische Aufgabe darin, ein flexibles einsetzbares Direktdruckverfahren anzugeben, mit welchem die Oberfläche irreguläre Behälter mit qualitativ hochwertigen Druckschichten versehen werden kann.

## Lösung

Diese Aufgabe wird erfindungsgemäß durch das Verfahren zum Bedrucken von Behältern gemäß Anspruch 1 und die Vorrichtung zum Bedrucken von Behältern gemäß Anspruch 12 gelöst. Bevorzugte Weiterbildung der Erfindung sind in den Unteransprüchen angegeben.

Das erfindungsgemäße Direktdruckverfahren zum Bedrucken eines irregulären Behälters umfasst das Bestimmen eines Pixelversatzes für einen Pixel einer Druckvorlage für ein Druckbild basierend auf einem Soll- und einem Ist-Durchmesser des zu bedruckenden Behälters, das Erzeugen einer korrigierten Druckvorlage basierend auf dem bestimmten Pixelversatz und das Aufbringen des Druckbildes basierend auf der korrigierten Druckvorlage mittels einer Direktdruckvorrichtung mit einer Vielzahl von Druckdüsen auf den irregulären Behälter.

Mit diesem Verfahren können Behälter unterschiedlicher Art, vorzugsweise in der Getränkeindustrie verwendete Flaschen aus Glas, Kunststoff oder Fasern umfassendem Material, bedruckt werden. Das Verfahren ist allerdings nicht auf die eben genannte Art von Behältern beschränkt und kann beispielsweise auch zum Bedrucken von Bechern, Gläsern, Dosen oder Tuben, wie sie beispielsweise in der Getränke-, Pharma-, Gesundheits- oder Lebensmittelindustrie verwendet werden, oder eines jeden anderen Behälters, welcher zum Aufnehmen eines flüssigen oder pastösen Mediums geeignet ist, ausgebildet sein.

Unter einem irregulären Behälter ist ein Behälter zu verstehen, dessen Oberfläche von einer idealen Zylinderform abweicht. So kann ein Behälter, dessen Behälteroberfläche zumindest teilweise eine konische Form aufweist, als irregulärer Behälter verstanden werden. Hierunter fällt beispielsweise ein Behälter, welcher einen zylindrischen Grundkörper und einen konischen Schulterbereich aufweist. Auch Behälter, deren Behälteroberfläche zumindest teilweise eine rundliche oder kegelförmige Form aufweist, können als irreguläre Behälter verstanden werden. Des Weiteren können auch Behälter, welche beispielweise eine Vertiefung in der Behälteroberfläche in Form eines Embossings oder eine Erhöhung auf der Behälteroberfläche in Form eines Debossings umfassen, als irreguläre Behälter klassifiziert werden.

Unter dem Solldurchmesser ist der größte Durchmesser des Behälters entlang seiner Behälterlängsachse zu verstehen. Unter Ist-Durchmesser ist der Durchmesser des Behälters an der Position der Oberfläche zu verstehen, an welcher der Pixel der Druckvorlage durch die Direktdruckvorrichtung aufgebracht werden soll. Wenn im Folgenden von einem Durchmesser gesprochen wird, dann ist darunter der Außerdurchmesser des Behälters zu verstehen.

Bei der Druckvorlage handelt es sich vorzugsweise um eine Rastergrafik des Druckbildes. Liegt das Druckbild als vektorbasierte Grafik vor, kann es beispielsweise vorgesehen sein, die vektorbasierte Grafik in eine Rastergrafik umzuwandeln, um eine Druckvorlage zu erhalten, mit welcher das erfindungsgemäße Verfahren durchgeführt werden kann.

Unter einem Pixelversatz ist eine relative Verschiebung einer Pixelkoordinate P der Druckvorlage auf eine neue Koordinate P+ΔP in der korrigierten Druckvorlage bezogen auf die (ursprüngliche) Druckvorlage zu verstehen. Vorzugsweise handelt es sich bei der relativen Verschiebung um eine Verschiebung parallel zu der Richtung entlang welcher das Druckbild auf den Umfang des Behälters aufgebracht wird.

Mit dem erfindungsgemäßen Verfahren kann basierend auf dem Ist- und dem Soll-Durchmesser des Behälters eine korrigierte Druckvorlage erzeugt werden, mittels welcher eine durch die irreguläre Form des Behälters ohne die Korrektur hervorgerufene Verzerrung eines auf die Behälteroberfläche aufgebrachten Druckbildes kompensiert werden kann. Da die korrigierte Druckvorlage mit jeder für den Direktdruck auf Behälter geeigneten Druckvorrichtung genutzt werden kann, erlaubt das erfindungsgemäße Verfahren ein flexibles Bedrucken von irregulären Behältern, ohne dass die Direktdruckvorrichtung zum Bedrucken der Behälter hierfür besondere Voraussetzungen erfüllen muss oder bestehende Vorrichtungen umgebaut werden müssten.

In einer Ausführungsform umfasst das Bestimmen des Pixelversatzes ein Bestimmen eines ersten Pixelversatzterms zur Korrektur einer Flugzeit eines von einer Druckdüse ausgestoßenen Tintentropfens. Unter Flugzeit ist hierbei die Zeit zu verstehen, welche ein Tintentropfen vom Ausstoßzeitpunkt aus der Druckdüse bis zum Auftreffen auf die Behälteroberfläche unter Annahme einer konstanten Fluggeschwindigkeit benötigt. Die Flugzeit ist in diesem Fall abhängig von der Distanz zwischen Druckdüsenöffnung und einer Position der Behälteroberfläche, auf welche der von der Druckdüsenöffnung ausgestoßene Tintentropfen auftrifft, und der Ausstoßgeschwindigkeit des Tintentropfens. Folglich ist die Flugzeit eines Tintentropfens bis zum Auftreffen auf die Position der Behälteroberfläche, deren Ist-Durchmesser geringer als der Soll-Durchmesser des Behälters ist, länger als die Flugzeit bis zum Auftreffen des Tintentropfens auf eine Position auf der Behälteroberfläche, deren Durchmesser dem Soll-Durchmesser entspricht. Für Positionen auf der Behälteroberfläche, deren Ist-Durchmesser kleiner als der Soll-Durchmesser ist, führt dies zu einer unerwünschten Verschiebung des Auftreffpunktes eines Tintentropfens auf der Behälteroberfläche in Druckrichtung (etwa durch ein Ablenken des Tintentropfens aufgrund der wirkenden Schwerkraft und/oder Fahrtwind aufgrund der Bewegung des Behälters o.ä.), was sich wiederum in einer Verzerrung des Druckbildes und einer qualitativ minderwertigen Druckgrafik äußert. Die Korrektur des flugzeitbedingten Pixelversatzes minimiert somit Verzerrungseffekte des Druckbildes und führt zu einer Erhöhung der Qualität des Druckergebnisses.

In einer Weiterbildung dieser Ausführungsform wird der erste Pixelversatzterm basierend auf einer Soll-Oberflächengeschwindigkeit des Behälters, einer Fluggeschwindigkeit des Tintentropfens und einer Pixeldichte des Druckbildes bestimmt. Bei der Soll-Oberflächengeschwindigkeit handelt es sich um eine Oberflächengeschwindigkeit einer Position der Behälteroberfläche, deren Durchmesser dem Soll-Durchmesser des Behälters entspricht. Unter Pixeldichte ist eine Anzahl von Pixeln pro Zoll des Druckbildes (kann eindimensional als lineare Pixeldichte entlang einer bestimmten Richtung oder auch zweidimensional als Flächen-Pixeldichte entlang der Oberfläche des Behälters vorgegeben sein) zu verstehen, welches mit der Direktdruckvorrichtung auf die Behälteroberfläche aufgebracht werden soll. Neben dem Ist- und dem Soll-Durchmesser erlauben die im Zusammenhang mit dieser Ausführungsform beschriebenen Parameter ein genaues Bestimmen des durch die Abstandsabhängigkeit der Flugzeit eines Tintentropfens hervorgerufenen Pixelversatzes und somit eine präzise Korrektur der abstandsabhängigen Flugzeit eines Tintentropfens vom Austreten aus der Druckdüsenöffnung bis zum Auftreffen auf die Behälteroberflächenposition.

In einer Ausführungsform umfasst das Bestimmen des Pixelversatzes ein Bestimmen eines zweiten Pixelversatzterms zur Korrektur einer Fluggeschwindigkeitsänderung eines von einer Druckdüse ausgestoßenen Tintentropfens. Zusätzlich zu dem oben beschriebenen Effekt führen mit abnehmendem Ist-Durchmesser und der damit einhergehenden größeren Distanz zwischen Druckdüsenöffnung und Behälteroberflächenelement, Luftreibungseffekte zu einer Abnahme der Tintentropfenfluggeschwindigkeit. Dieser Effekt bewirkt eine weitere, mit abnehmenden Ist-Durchmesser zunehmende, Verschiebung des Auftreffpunktes eines Tintentropfens in Druckrichtung. Analoges gilt für einen Ist-Durchmesser, der größer als der Soll-Durchmesser des Behälters ist. Durch die Korrektur eines durch die Änderung der Fluggeschwindigkeit hervorgerufenen Pixelversatzes können somit Verzerrungseffekte des Druckbildes weiter minimiert und die Qualität des Druckbildes weiter verbessern werden.

In einer Weiterbildung dieser Ausführungsform wird der zweite Pixelversatzterm basierend auf einer Pixeldichte, einer Soll-Oberflächengeschwindigkeit des Behälters, einer Fluggeschwindigkeit des Tintentropfens beim Austritt aus einer Druckdüse und einer mittleren Geschwindigkeit des Tintentropfens bestimmt. Bei der mittleren Geschwindigkeit handelt es sich dabei um einen Mittelwert der Geschwindigkeit des Tintentropfens beim Austritt aus der Druckdüsenöffnung und der Geschwindigkeit des Tintentropfens beim Auftreffen auf der Behälteroberfläche. Neben dem Ist- und dem Solldurchmesser erlauben diese Parameter ein genaues Bestimmen des durch die Fluggeschwindigkeitsänderung hervorgerufenen Pixelversatzes und eine präzise Korrektur dieses Pixelversatzes.

In einer Ausführungsform umfasst das Bestimmen des Pixelversatzes ein Bestimmen eines dritten Pixelversatzterms zur Korrektur eines zusammensetzungsabhängigen Flugverhaltens eines von einer Druckdüse ausgestoßenen Tintentropfens. Unter Zusammensetzung ist dabei eine chemische oder eine Farbzusammensetzung des Tintentropfens zu verstehen. Da die chemische oder Farbzusammensetzung eines Tintentopfen direkten Einfluss auf dessen Flugverhalten nimmt (etwa aufgrund der Viskosität des Tintentropfens und/oder des an der Oberfläche wirkenden Reibungswiderstands), führt auch diese zu einer für die verwendete Drucktinte charakteristischen Verschiebung des Auftreffpunktes des Tintentropfens in Druckrichtung und somit zu einer unerwünschten Verzerrung des Druckbildes. Durch die Korrektur eines durch die Zusammensetzung des Tintentropfens bedingten Pixelversatzes können Verzerrungseffekte des Druckbildes weiter minimiert und die Qualität des Druckbildes weiter verbessert werden.

In einer Weiterbildung dieser Ausführungsform wird der dritte Pixelversatzterm basierend auf einem relativen zusammensetzungsabhängigen Korrekturfaktor und einem Verhältnis aus Soll-Durchmesser und einem minimalen Durchmesser des Behälters bestimmt. Der relative Korrekturfaktor beschreibt dabei eine relative Korrektur für eine spezifische Drucktintenzusammensetzung bezogen auf eine Standardtinte. Der minimale Durchmesser des Behälters entspricht wiederum dem minimalen Durchmesser des Behälters in einem Druckbereich. Mittels der oben beschriebenen Parameter kann der durch die Tintenzusammensetzung bedingte Pixelversatz genau bestimmt, und die durch diesen Effekt hervorgerufene Verzerrung des Druckbildes korrigiert werden.

In einer Ausführungsform sind die Druckdüsen der Direktdruckvorrichtung in wenigstens zwei in Druckrichtung nebeneinanderliegenden Druckdüsenreihen angeordnet und das Bestimmen des Pixelversatzes umfasst ein Bestimmen eines vierten Pixelversatzterms zur Korrektur für eine Direktdruckvorrichtung mit wenigstens zwei nebeneinanderliegenden Druckdüsenreihen. Die beiden Druckdüsenreihen können insbesondere um einen halben Abstand zweier unmittelbar benachbarter Druckdüsen einer Druckdüsenreihe entlang der Druckdüsenrichtung gegeneinander verschoben sein. Durch den vierten Korrekturterm kann erreicht werden, dass die durch die Druckdüsenreihen ausgestoßenen Tintentropfen untereinander in genau einer Reihe auf die Oberfläche des Behälters aufgebracht werden und eine Verzerrung des Druckbildes auf dem irregulären Behälter verhindert und die Qualität der Druckschicht erhöht werden.

In einer Weiterbildung dieser Ausführungsform wird der vierte Pixelversatzterm zur Korrektur eines Pixelversatzes der bezogen auf die Druckrichtung nachlaufenden Düsenreihe basierend auf einem Abstand der beiden Druckdüsenreihen bestimmt. Somit lässt sich der Korrekturfaktor für die bezüglich des Druckvorschubs nachlaufende Druckdüse bestimmen und die Erzeugung eines höheraufgelösten Druckbildes auch auf irregulären Behältern erreichen.

In einer Ausführungsform wird die Druckvorlage vor Bestimmen des Pixelversatzes in verschiedene Farb-Layer aufgeteilt und der Pixelversatz für jedes Farb-Layer separat bestimmt. Somit lässt sich nicht nur eine Korrektur bei Verwendung einer Druckfarbe, sondern auch eine Korrektur bei Verwendung von Farbdruck durchführen.

In einer Ausführungsform wird basierend auf den bestimmten Pixelversätzen für jeden Farb-Layer eine korrigierte Druckvorlage bestimmt. Somit können auch farbige Druckbilder auf irreguläre Behälter aufgebracht werden, wobei für jede Farbschicht separat eine eigene korrigierte Druckvorlage bereitgestellt wird und somit für jede der Farbschichten ein verzerrungsfreier Auftrag auch auf irreguläre Behälter sichergestellt werden kann.

Erfindungsgemäß ist außerdem eine Direktdruckvorrichtung zum Bedrucken von irregulären Behältern, wobei die Direktdruckvorrichtung ein Druckmodul mit einer Vielzahl von Druckdüsen und eine Steuereinheit umfasst, wobei die Steuereinheit ausgebildet ist das Verfahren nach einer der vorhergehenden Ausführungsformen durchzuführen.

Die Steuereinheit kann somit basierend auf dem Ist- und dem Soll-Durchmesser des Behälters eine korrigierte Druckvorlage erzeugen, mittels welcher eine durch die irreguläre Form des Behälters hervorgerufene Verzerrungen eines auf die Behälteroberfläche aufgebrachten Druckbildes kompensiert werden kann. Da die korrigierte Druckvorlage mit jeder für Direktdruck auf Behälter geeigneten Druckvorrichtung genutzt werden kann, erlaubt das erfindungsgemäße Verfahren ein flexibles Bedrucken von irregulären Behältern, ohne dass die Direktdruckvorrichtung dabei weitere Voraussetzungen erfüllen muss.

**Kurze Figurenbeschreibung**

Figur 1: Vorrichtung zum Bedrucken eines irregulären Behälters gemäß einer Ausführungsform

Figur 2: Schematische Darstellung einer Direktdruckvorrichtung zum Bedrucken eines irregulären Behälters gemäß einer weiteren Ausführungsform

**Ausführliche Figurenbeschreibung**

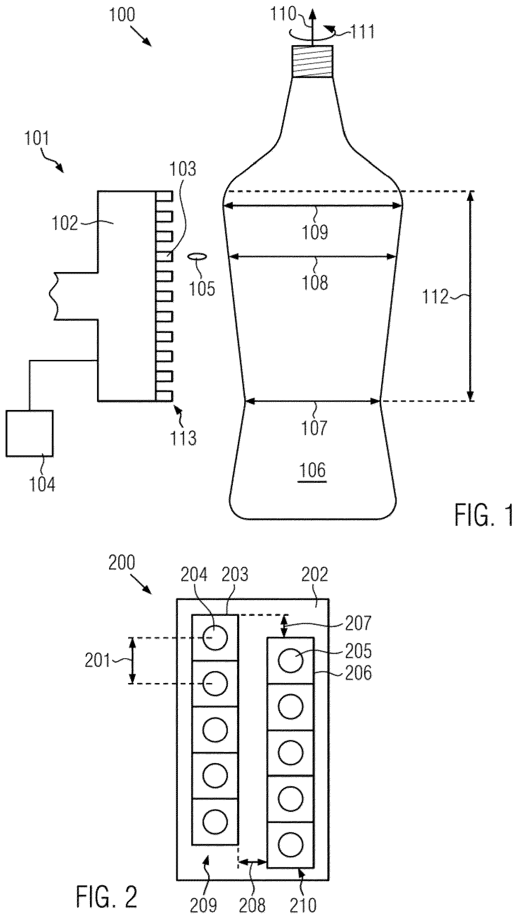

Figur 1 zeigt eine Vorrichtung 100 zum Durchführen des erfindungsgemäßen Verfahrens zum Bedrucken eines irregulären Behälters 106 gemäß einer Ausführungsform. Ein irregulär geformter Behälter kann beispielhaft als ein Behälter verstanden werden, der eine Grundform (beispielsweise zylindrisch oder kubisch) aufweist, dessen Oberfläche aber zumindest bereichsweise von dieser Grundform abweicht (etwa durch Embossings, Debossings, von der Grundform abweichende Krümmungen der Oberfläche etwa im Halsbereich des Behälters oder ähnliches).

Gezeigt ist eine Direktdruckvorrichtung 101, welche ein Druckmodul 102 mit einer Vielzahl von Druckdüsen 103 zum Ausbringen von Tintentropfen 105 auf die Oberfläche des irregulären Behälters 106 umfasst. In der hier diskutierten Ausführungsform sind die Druckdüsen in einer Druckdüsenreihe 113 angeordnet. Die Anzahl der Druckdüsen 103 und deren Anordnung ist als beispielhaft zu verstehen. Es kann auch ein Druckmodul 102 mit jeder beliebigen anderen Anzahl von Druckdüsen vorgesehen sein. Das Druckmodul 102 ist hierfür neben dem zu bedruckenden Behälter angeordnet, so dass bei Rotation des Behälters um seine Längsachse 110 ein Druckbild in einem Druckbereich 112 entlang dessen Umfang aufgebracht werden kann.

Bei dem Behälter 106 handelt es sich vorzugsweise um eine in der getränkeverarbeitenden Industrie verwendete Flasche aus Glas, Kunststoff oder Fasern umfassendem Material. Der Behälter ist allerdings nicht auf diese Ausgestaltung beschränkt und kann alternativ oder zusätzlich als ein Becher, ein Glas, eine Dose oder eine Tube, wie sie beispielsweise in der Getränke-, Pharma- , Gesundheits- oder Lebensmittelindustrie verwendet werden, oder auch als jede andere Art von Behälter, welcher zum Aufnehmen eines flüssigen oder pastösen Mediums geeignet ist, ausgestaltet sein.

Im Folgenden wird der Behälter ohne Beschränkung der Allgemeinheit als ein irregulärer Behälter mit einer im Wesentlichen zylindrischen Grundform bzw. idealen Zylinderform als Grundform beschrieben, dessen Oberfläche von einer idealen Zylinderform abweicht. So kann ein Behälter, dessen Behälteroberfläche zumindest teilweise eine konische Form aufweist, als irregulärer Behälter verstanden werden. Auch Behälter, deren Oberfläche zumindest teilweise eine kugel- oder kegelförmige Form besitzt sind als irreguläre Behälter zu verstehen. Die Oberfläche des in der Figur 1 dargestellten irregulären Behälters verjüngt sich entlang der Behälterlängsachse 110 zur Behältermitte hin und hat einen maximalen Durchmesser (Soll-Durchmesser) $D_{Soll}$ 109 im Schulterbereich.

Die in der Figur 1 beschriebene Vorrichtung 100 ist jedoch nicht auf das Bedrucken dieser spezifischen Behälterform beschränkt und eignet sich zum Bedrucken eines jeden irregulären Behälters, wie oben bereits ausgeführt.

Um eine Rotation 111 des Behälters 106 um seine Längsachse 110 zu erreichen, kann der Behälter beispielsweise auf einem Drehteller platziert werden, welcher mittels eines Abtriebs, beispielsweise einem Servomotor, zur Rotation gebracht werden kann (hier nicht dargestellt). Vorzugsweise sind der Antrieb des Drehtellers und die Direktdruckvorrichtung 101 miteinander synchronisiert, so dass die Rotationsgeschwindigkeit des Drehtellers beziehungsweise des Behälters 106 auf eine Druckgeschwindigkeit der Direktdruckvorrichtung 101 abgestimmt ist.

In einer Ausführungsform kann es vorgesehen sein, dass der Drehteller als eine Behälteraufnahme einer Rundläufermaschine einer Behälterbehandlungsanlage ausgestaltet ist und die Direktdruckvorrichtung 101 stationär entlang der Peripherie der Rundläufermaschine angeordnet ist. Alternativ kann die Direktdruckvorrichtung 101 auch direkt der Behälteraufnahme beziehungsweise dem Drehteller zugeordnet sein. In einer weiteren Ausführungsform kann auch vorgesehen sein, dass das Druckmodul 102 der Direktdruckvorrichtung 101 drehbar um die Behälterlängsachse 110 gelagert ist und zum Aufbringen des Druckbildes auf die Behälteroberfläche um den Umfang des Behälters 106 herumbewegt wird.

Die Direktdruckvorrichtung 101 kann ausgebildet sein, unterschiedliche Arten von Farben, wie beispielsweise weiße Farbe, CMYK Farben, Lackfarben und Sonderfarben zu verdrucken. Vorzugsweise handelt es sich bei den Farben um UV-Drucktinten, wobei alternativ auch Drucktinten anderer Art verdruckt werden können. In einer Ausführungsform können mehrere Druckmodule entlang des Behälterumfangs beispielsweise in Drehrichtung des Behälters hintereinander angeordnet sein, wobei durch jedes der Druckmodule eine andere Farbe auf die Behälteroberfläche aufgebracht wird. Die Direktdruckvorrichtung kann zudem ausgebildet sein, funktionale Tinten, wie beispielsweise leitfähige, temperaturempfindliche oder magnetische Tinten, zu verdrucken. Die Direktdruckvorrichtung kann optional eine Aushärteeinheit mit einer Lichtquelle zum Ausbringen von UV-Strahlung umfassen. Auch Lichtquellen andere Art, wie beispielweise eine im sichtbaren Wellenlängenbereich arbeitende Lichtquelle sind denkbar. Insbesondere kann die Lichtquelle basierend auf der durch die Direktdruckvorrichtung verdruckten Tinte gewählt sein.

Erfindungsgemäß umfasst die Direktdruckvorrichtung 101 eine Steuereinheit 104 (beispielsweise ein Computer mit einem Prozessor und zugeordnetem flüchtigem oder nicht-flüchtigem Speicher), welche ausgebildet ist, die Druckdüsen 103 der Direktdruckvorrichtung 101 basierend auf einer Druckvorlage anzusteuern und so ein Ausbringen von Drucktinte zu bewirken, um so ein Druckbild auf der Oberfläche des irregulären Behälters 106 zu erzeugen. Erfindungsgemäß ist die Steuereinheit 104 außerdem ausgebildet, für wenigstens einen Pixel einer Druckvorlage basierend auf einem Ist- 108 und einem Soll-Durchmesser 109 des zu bedruckenden Behälters 106 einen Pixelversatz zu bestimmen und basierend auf dem bestimmten Pixelversatz eine korrigierte Druckvorlage zu erzeugen, wie dies nachfolgend noch beschrieben wird.

Unter dem Solldurchmesser 109 ist der maximale Durchmesser des Behälters verstehen, wohingegen der Ist-Durchmesser 108 den Durchmesser des Behälters 106 an einer Oberflächenposition beschreibt, an welcher der Pixel der Druckvorlage durch die Direktdruckvorrichtung aufgebracht werden soll. Unter dem Durchmesser ist grundsätzlich der Außerdurchmesser des Behälters zu verstehen, da die äußere Oberfläche des Behälters bedruckt wird.

Bei der Druckvorlage kann es sich beispielsweise um eine Rastergrafik des Druckbildes, welches auf die Oberfläche des Behälters aufgebracht werden soll, handeln. Liegt das Druckbild beispielsweise als Vektorgrafik vor, kann in einer Ausführungsform vorgesehen sein, die Vektorgrafik in eine Rastergrafik umzuwandeln. Die Druckvorlage kann beispielsweise in einem JPEG, einem PNG, einem GIF, einem BMP oder einem TIFF Format vorliegen. Es kann jedoch auch jedes andere zur Darstellung einer Rastergrafik geeignete Bildformat verwendet werden.

Der Pixelversatz beschreibt eine relative Verschiebung $\Delta P$ einer Pixelkoordinate P der Druckvorlage, wobei durch den Pixelversatz ein Unterschied zwischen dem Ist-Durchmesser des Behälters an der Oberflächenposition, an welcher die entsprechende Pixelkoordinate der Druckvorlage aufgebracht werden soll, und eine daraus resultierende Verzerrung des Druckbildes kompensiert werden kann. Vorzugsweise handelt sich bei der relativen Verschiebung um eine Verschiebung parallel zu der Richtung entlang welcher das Druckbild auf den Umfang des Behälters 106 aufgebracht wird.

In einer Ausführungsform kann die Steuereinheit 104 eine Speichereinheit umfassen, in welcher die Druckvorlage hinterlegt ist. Außerdem können in der Speichereinheit Oberflächendaten des zu bedruckenden Behälters gespeichert sein. Die Oberflächendaten können beispielsweise eine Vielzahl an Oberflächenkoordinaten des Behälters umfassen, wobei jeder Oberflächenkoordinate des Behälters ein Ist-Durchmesser des Behälters an der entsprechenden Oberflächenkoordinate zugeordnet ist. Im Falle rotationssymmetrischer Behälter kann es ausreichend sein, wenn die Oberflächendaten eine Vielzahl von Höhenpositionen des Behälters entlang dessen Längsachse und den jeder der Höhenpositionen zugeordneten Ist-Durchmesser des Behälters umfassen. Alternativ kann auch eine Funktion in der Speichereinheit hinterlegt sein, welche den Behälterdurchmesser in Abhängigkeit einer Höhenposition entlang der Behälterlängsachse beschreibt.

Neben den Oberflächendaten können in der Speichereinheit weitere Verfahrensparameter, welche zur Bestimmung des Pixelversatzes benutzt werden, hinterlegt sein. So kann auch der Soll-Durchmesser des Behälters, welcher den maximalen Durchmesser des Behälters beschreibt und zum Durchführen des erfindungsgemäßen Verfahrens bevorzugt genutzt wird, in der Speichereinheit hinterlegt sein. Optional kann auch ein Druckbereich, welcher einen Oberflächenbereich des Behälters beschreibt, auf welchen das Druckbild aufgebracht werden soll, in der Speichereinheit hinterlegt sein. Beispielsweise kann der Druckbereich durch wenigstens eine Oberflächenkoordinate des Behälters beschrieben sein. Alternativ kann der Druckbereich auch durch zwei Höhenpositionen entlang der Behälterlängsachse 110 und einen Drehwinkel des Behälters beschrieben sein.

Die Oberflächendaten und die weiteren Verfahrensparameter können für eine Vielzahl verschiedener Behältertypen in einer Datenbank der Speichereinheit abgespeichert sein, so dass die in der Figur 1 beschriebene Vorrichtung flexibel einsetzbar ist und verschiedene Behältertypen bedrucken kann. Alternativ kann es auch vorgesehen sein, dass die Steuereinheit 104 mit einem Server in Verbindung steht, welcher einer Datenbank mit verschiedenen Datensätzen von Oberflächendaten, Verfahrensparametern, Druckvorlagen und Druckbildern umfasst. Die Steuereinheit 104 kann mit einer Eingabeeinheit verbunden sein, so dass ein Benutzer vor Durchführen des Verfahrens einen bestimmten Behältertypen auswählen kann. In einer Ausführungsform kann es auch vorgesehen sein, dass die Direktdruckvorrichtung eine Erkennungseinheit, wie beispielsweise eine Kamera, umfasst, mittels welcher ein Behälter automatisch erkannt werden kann und bestimmte Daten, wie beispielsweise die Oberflächendaten oder die Verfahrensparameter automatisch durch die Steuereinheit 104 aus der Datenbank geladen werden.

Die Steuereinheit 104 kann dann für wenigstens einen Pixel der Druckvorlage basierend auf dem Ist-Durchmesser 108 des Behälters an der Position, an welcher der Pixel aufgebracht werden soll und dem Soll-Durchmesser 108 einen Pixelversatz bestimmen. Der Ist-Durchmesser $D_{ist}$ 108 kann durch die Steuereinheit 104 beispielsweise basierend auf den oben beschriebenen Behälteroberflächendaten bestimmt werden. In der korrigierten Druckvorlage ist der wenigstens eine Pixel dann um den bestimmten Pixelversatz bezüglich der Druckrichtung verschoben, so dass ein Unterschied zwischen Ist- und Soll-Durchmesser und dem dadurch hervorgerufenen Versatz des Auftreffpunktes des Tintentropfens 105 kompensiert werden kann. Da der Pixelversatz proportional zur Differenz $D_{ist} - D_{Soll}$ ist und $D_{ist} \leq D_{Soll}$ gilt, findet die Verschiebung des entsprechenden Pixels in der korrigierten Druckvorlage entgegen der Druckrichtung statt. Dies führt dazu, dass der entsprechende Pixel der korrigierten Druckvorlage zu einem effektiv früheren Zeitpunkt durch die entsprechende Druckdüse gedruckt wird, beziehungsweise der entsprechende Tintentropfen 105 zu einem früheren Zeitpunkt ausgestoßen wird, als der entsprechende Pixel der ursprünglichen Druckvorlage. Durch die Verschiebung des Pixels entgegen der Druckrichtung kann somit eine Abweichung des Ist- vom Soll-Durchmesser an der entsprechenden Behälteroberflächenposition effektiv kompensiert werden und eine Verzerrung des aufgebrachten Druckbildes verhindert werden.

Der Pixelversatz, der zum Korrigieren der Druckvorlage bestimmt wird, kann einen oder auch eine Vielzahl (insbesondere eine Summe) von Pixelversatztermen umfassen, die beispielsweise jeweils einen Pixelversatz, der auf eine bestimmte Ursache zurückzuführen ist (wie nachfolgend noch beschrieben) bestimmen und basierend darauf die Druckvorlage korrigieren. Es versteht sich, dass die Korrektur der Druckvorlage basierend auf wenigstens einem oder einer beliebigen Kombination der einzelnen Pixelversatzterme miteinander erfolgen kann, auch wenn die Pixelversatzterme im nachfolgenden isoliert voneinander beschrieben werden.

In einer Ausführungsform kann vorgesehen sein, dass der Pixelversatz einen ersten Pixelversatzterm zur Korrektur einer Flugzeit eines von einer Druckdüse 103 ausgestoßenen Tintentropfens 105 bis zum Auftreffen auf die Behälteroberfläche umfasst. Mit abnehmendem Ist-Durchmesser $D_{ist}$ 108 des Behälters vergrößert sich die Distanz zwischen einer Druckdüsenöffnung 103 des Direktdruckmoduls, aus welcher der Tintentropfen ausgestoßen wird und der Behälteroberflächenposition, auf welche der Tintentropfen 105 aufgebracht wird. Mit zunehmender Distanz vergrößert sich jedoch auch die Flugzeit des Tintentropfens, so dass der Tintentropfen in Vergleich zu einer Behälteroberflächenposition mit dem Soll-Durchmesser $D_{Soll}$ 109, zu einem späteren Zeitpunkt und somit in Druckrichtung versetzt auf der Behälteroberfläche auftrifft. Je größer die Abweichung des Ist-Durchmessers 108 vom Soll-Durchmesser 109 des Behälters an der Stelle, an welcher der Tintentropfen 105 aufgebracht werden soll, desto größer der Versatz des Tintentropfens 105 bei Auftreffen auf die Behälteroberfläche in Druckrichtung und desto stärker die Verzerrung des erzeugten Druckbildes verglichen mit der ursprünglichen Druckvorlage. Analoges gilt für den Fall, dass der Durchmesser $D_{ist}$ größer als der Durchmesser $D_{Soll}$ ist.

Neben dem Ist- 108 und dem Soll-Durchmesser 109 können zur Bestimmung des durch den eben beschriebenen Effekt hervorgerufenen Pixelversatzes die Soll-Oberflächengeschwindigkeit $v_{Soll}$ einer Position der Behälteroberfläche mit maximalem Behälterdurchmesser $D_{Soll}$, die Fluggeschwindigkeit des Tintentropfens $v_{Tinte}$ und die Pixeldichte dpi des aufzubringenden Druckbildes in Einheiten von Druckpunkten pro Zoll verwendet werden. Auch diese Parameter können in der Speichereinheit der Steuereinheit 104 hinterlegt sein, so dass die Steuereinheit zur Bestimmung des Pixelversatzes auf diese zugreifen kann.

Für den ersten Pixelversatzterm kann gelten:

$$\Delta P_1 = \frac{dpi}{25{,}4} \frac{v_{Soll}}{v_{Tinte}} \cdot \frac{1}{2}(D_{ist} - D_{Soll}).$$

Basierend auf diesem Zusammenhang kann die Steuereinheit 104 dann für wenigstens einen Pixel der Druckvorlage einen ersten Pixelversatzterm bestimmen, wodurch ein durch die Abstandsabhängigkeit der Flugdauer eines Tintentropfens 105 hervorgerufener Pixelversatz berücksichtigt und eine korrigierte Druckvorlage erstellt werden kann. Für die Position eines korrigierten Pixels der korrigierten Druckvorlage gilt somit $P' = P + \Delta P_1$, wobei P die Position des entsprechenden Pixels in der ursprünglichen Druckvorlage beschreibt. Wie bereits weiter oben beschrieben ist $\Delta P_1 \leq 0$, so dass die Verschiebung auch hier entgegen der Druckrichtung stattfindet. Wird nun mit der Druckvorrichtung basierend auf der korrigierten Druckvorlage ein Druckbild auf die Behälteroberfläche aufgebracht, dann kann der durch den Flugzeitunterschied hervorgerufene Verzerrungseffekte im Druckbild kompensiert werden und die Qualität des erzeugten Druckbildes verbessert werden.

In einer weiteren Ausführungsform kann es vorgesehen sein, dass das Bestimmen des Pixelversatzes ein Bestimmen eines zweiten Pixelversatzterms zur Korrektur einer Fluggeschwindigkeitsänderung eines von einer Druckdüse ausgestoßenen Tintentropfens umfasst. Während für die im Zusammenhang mit der vorhergehenden Ausführungsform bestimmten Flugzeitänderung eine konstante Geschwindigkeit des Tintentropfens 105 angenommen wird, führt der Unterschied zwischen Ist-Durchmesser 108 an der Position der Behälteroberfläche, an welcher Tintentropfen 105 aufgebracht werden soll, und Soll-Durchmesser 109 auch zu einer Änderung der Fluggeschwindigkeit des Tintentropfens 105. Hierfür sind insbesondere Luftreibungseffekte verantwortlich, welche zu einer Reduzierung der Fluggeschwindigkeit des Tintentropfens 105 mit abnehmendem Ist-Durchmesser 108 und einer entsprechenden Verschiebung des Auftreffpunktes des Tintentropfens 105 in Druckrichtung führen.

Zur Korrektur dieses Effekts kann durch die Steuereinheit 104 ein zweiter Pixelversatzterm bestimmt werden, welcher neben dem Ist-Durchmesser 108 des Behälters an der Oberflächenposition an welcher der Pixel aufgebracht werden soll und dem Soll-Durchmesser 109 auch die Fluggeschwindigkeit des Tintentropfens 105 beim Austritt aus der Druckdüsenöffnung die $v_{Tinte\,Norm}$, die mittlere Tintengeschwindigkeit $v_{Tinte\,Mittel}$ = $1/2(v_{Tinte\,Norm} + v_{Tinte\,Min})$ und die Differenz aus Ist- und Soll-Durchmesser

$$A_{diff} = \frac{1}{2}(D_{ist} - D_{soll})$$

berücksichtigt. $v_{Tinte\,Min}$ beschreibt hierbei die Fluggeschwindigkeit des Tintentropfens 105 beim Auftreffen auf die Behälteroberfläche und berechnet sich über den Zusammenhang $V_{Tinte\,Min} = v_{Tinte\,Norm}(1 - v_{delta})A_{diff}$, wobei $v_{delta}$ die Geschwindigkeitsabnahme des Tintentropfens pro Abstand (beispielsweise pro mm Flugstrecke) beschreibt. Auch diese Parameter können in der Speichereinheit der Steuereinheit 104 hinterlegt sein, so dass die Steuereinheit 104 zur Bestimmung des zweiten Pixelversatzterms auf diese zugreifen kann.

Der zweite Pixelversatzterm kann dann bestimmt werden zu

$$\Delta P_2 = \frac{dpi}{25{,}4} v_{Soll}\left(\frac{A_{diff}}{v_{Tinte\,Norm}} - \frac{A_{diff}}{v_{Tinte\,Mittel}}\right).$$

Basierend auf diesem Zusammenhang kann die Steuereinheit 104 dann für wenigstens einen Pixel der Druckvorlage einen zweiten Pixelversatzterm bestimmen, so dass ein durch die Änderung der Fluggeschwindigkeit des Tintentropfens 105 hervorgerufenen Pixelversatz berücksichtigt werden und eine korrigierte Druckvorlage erzeugt werden kann. Wird nun mit der Druckvorrichtung 101 basierend auf der korrigierten Druckvorlage ein Druckbild auf die Behälteroberfläche aufgebracht, dann kann der durch die Fluggeschwindigkeitsänderung hervorgerufene Verzerrungseffekte im Druckbild kompensiert werden und die Qualität des erzeugten Druckbildes weiter verbessert werden.

In einer weiteren Ausführungsform kann es vorgesehen sein, dass das Bestimmen des Pixelversatzes ein Bestimmen eines dritten Pixelversatzterms zur Korrektur eines zusammensetzungsabhängigen Flugverhaltens eines von einer Druckdüse 103 ausgestoßenen Tintentropfens 105 umfasst. Unter einer Zusammensetzung ist insbesondere eine chemische oder eine Farbzusammensetzung des Tintentropfens 105 zu verstehen. Die Zusammensetzung des Tintentropfens hat insbesondere Einfluss auf dessen Viskosität, so dass Tintentropfen unterschiedlicher Zusammensetzung aufgrund der Luftreibung unterschiedlich stark während ihrem Flug von der Druckdüsenöffnung 103 bis zu ihrem Auftreffen auf der Behälteroberfläche verformt werden und somit ein unterschiedliches Flugverhalten aufweisen. Das unterschiedliche Flugverhalten führt wiederum zu einem unerwünschten Versatz des Auftreffpunktes von Tintentropfen 105 verschiedener Zusammensetzung auf der Behälteroberfläche.

Neben dem Ist-Durchmesser und dem Soll-Durchmesser wird der dritte Pixelversatzterm basierend auf einem relativen Korrekturfaktor $K_{rel}$, welcher von der Zusammensetzung des Tintentropfens abhängt, bestimmt. Der relative Korrekturfaktor kann in einer Ausführungsform über den Quotienten aus einem relativen Versatz $O_{rel}$ und dem Verhältnis aus dem minimalen Durchmesser des Behälters im Druckbereich $D_{min}$ 107 und dem Soll-Durchmesser $D_{Soll}$ 109 als

$$K_{rel} = \frac{O_{rel}}{\frac{D_{min}}{D_{soll}}}.$$

berechnet werden. Auch diese Parameter können in der Speichereinheit der Steuereinheit 104 hinterlegt sein, so dass die Steuereinheit zur Bestimmung des dritten Pixelversatzterms auf diese zugreifen kann.

Entsprechend kann der dritte Pixelversatzterm dann zu

$$\Delta P_3 = \frac{1}{2}(D_{ist} - D_{soll})K_{rel}.$$

bestimmt werden. Analog zu dem im Zusammenhang mit dem ersten und zweiten Pixelkorrekturterm beschriebenen Vorgehen, kann die Steuereinheit 104 dann basierend auf dem dritten Pixelversatzterm für wenigstens einen Pixel der Druckvorlage einen durch die Zusammensetzung des Tintentropfens 105 hervorgerufenen Pixelversatz bestimmten und hieraus eine korrigierte Druckvorlage erzeugen. Wird nun mit der Druckvorrichtung 101 basierend auf der korrigierten Druckvorlage ein Druckbild auf die Behälteroberfläche aufgebracht, dann kann der durch die Zusammensetzung des Tintentropfens 105 hervorgerufene Verzerrungseffekte im Druckbild kompensiert werden und die Qualität des erzeugten Druckbildes weiter verbessert werden.

Alle oben beschriebene Ausführungsformen sind miteinander kombinierbar. So kann es beispielsweise auch vorgesehen sein, für wenigstens einen Pixel der Druckvorlage einen Pixelversatz zu bestimmen, welcher einen ersten, zweiten und dritten Pixelversatzterm umfasst. Alternativ kann es auch vorgesehen sein, einen Pixelversatz basierend auf der Summe aus erstem und zweitem Pixelversatzterm, aus der Summe aus erstem und drittem Pixelversatzterm oder aus der Summe aus zweiten und drittem Pixelversatzterm zu bestimmen.

In einer weiteren Ausführungsform kann es vorgesehen sein, die Druckgrafik vor Durchführen des oben beschriebenen Verfahrens in einzelne Farb-Layer zu zerlegen und das Verfahren entsprechend einer der oben beschriebenen Ausführungsformen oder deren Kombination auf jedes der Farb-Layer anzuwenden, so dass für jedes der Farb-Layer eine korrigierte Druckvorlage (auch Farb-Layer-Druckvorlage genannt) erzeugt wird. Zum Aufbringen des farbigen Druckbildes können dann mehrere der im Zusammenhang mit der Figur 1 gezeigten Druckvorrichtungen 101 entlang des Umfangs des Behälters 106 in Reihe angeordnet sein und durch jede der Druckvorrichtungen 101 ein Farbdruckbild basierend auf einer der korrigierten Farb-Layer-Druckvorlagen auf die Behälteroberfläche aufgebracht werden.

Eine speziellere Ausführungsform des im Zusammenhang mit der Figur 1 beschriebenen Verfahrens, bei welchem das Druckmodul 102 zwei nebeneinanderliegende Druckdüsenreihen umfasst, wird im Zusammenhang mit der Figur 2 beschrieben, wobei eine Draufsicht auf das Druckmodul 202 einer Direktdruckvorrichtung 200 gemäß einer Ausführungsform gezeigt ist.

Die Druckdüsen 204, 205 einer Druckdüsenreihe 209, 210 sind in der hier beschriebenen Ausführungsform äquidistant in Drückdüsenrichtung zueinander beabstandet und in Druckdüsenbereichen 203, 206 angeordnet. Vorzugsweise sind die beiden nebeneinanderliegenden Druckdüsenreihen 209, 210 parallel zueinander ausgerichtete und entlang der Druckdüsenrichtung um die Hälfte 207 des Druckdüsenabstandes 201 zueinander verschoben. Das in der Figur 2 beschriebene Druckmodul 202 ist in seiner Ausgestaltung als beispielhaft zu verstehen, insbesondere können die Druckdüsenreihen 209, 210 auch jede größere oder kleinere Anzahl von Druckdüsen 204, 205 umfassen. Ferner sind auch Druckmodule 202 denkbar, in welchen beispielsweise mehrere Paare von nebeneinanderliegenden Druckdüsenreihen 209, 210 hintereinander (gesehen beispielsweise in Drehrichtung des Behälters vor dem jeweiligen Druckmodul) angeordnet sind. So können in einer Ausführungsform beispielsweise auch zwei oder drei Paare nebeneinanderliegender Druckdüsenreihen 209, 210 entsprechend der Ausführungsform der Figur 2 angeordnet sein. Dies kann beispielsweise vorgesehen sein, wenn durch die verschiedenen Druckdüsenpaare verschiedene Farben auf die Behälteroberfläche ausgebracht werden sollen.

Für Behälter mit einem konstanten Behälterdurchmesser im Druckbereich ist bekannt, die beiden Druckdüsenreihen 209, 210 unter Verwendung einer Standardkorrektur derart anzusteuern, dass der Abstand der beiden Druckdüsenreihen 208 senkrecht zur Druckdüsenrichtung kompensiert wird und die von der ersten 209 und der zweiten Druckdüsenreihe 210 ausgestoßenen Tintentropfen auf der Behälteroberfläche untereinander entlang einer zu den Druckdüsenreihen parallel verlaufenden Druckpunktreihe aufgebracht werden. Durch die Standardkorrektur kann somit eine Druckpunktreihe auf der Behälteroberfläche erzeugen, deren Auflösung doppelt so hoch ist, wie die durch eine einzelne Druckdüsenreihe 209, 210 erzielbare Druckauflösung.

Für irreguläre Behälter, deren Behälterdurchmesser im Druckbereich nicht konstant ist, ist die oben beschriebene Standardkorrektur nicht mehr gültig. So führt der sich ändernde Ist-Durchmesser des Behälters im Druckbereich zu einem Versatz der durch die in Bezug auf die Druckrichtung nachlaufende Druckdüsenreihe 209 auf die Behälteroberfläche ausgebrachten Tintentropfen verglichen mit den durch die vorlaufende Druckdüsenreihe 210 ausgebrachten Tintentropfen. Folglich ist für irreguläre Behälter ein vierter Pixelversatzterm, für die nachlaufende 209 der beiden Druckdüsenreihen notwendig. Auch diese Korrektur ist, wie die bereits im Zusammenhang mit der Figur 1 beschriebenen Pixelkorrekturterme, vom Ist-Durchmesser 108 des Behälters an der Position, an welcher der Tintentropfen durch die entsprechende Druckdüse der nachlaufenden Druckdüsenreihe aufgebracht werden soll, und dem Soll-Durchmesser 109 des Behälters, welcher dem maximalen Behälterdurchmesser entsprechen kann, abhängig. Zum Bestimmen des vierten Pixelversatzterms wird ferner noch der Abstand der beiden Druckdüsenreihen 208 in Einheiten des Druckdüsenabstands $A_{\text{Düsenreihen}}$ 201 verwendet.

Somit ergibt sich für einen Pixelversatzterm für die nachlaufende der beiden Druckdüsenreihen

$$\Delta P_4 = A_{\text{Düsenreihen}}\left(1 - \frac{D_{\text{ist}}}{D_{\text{soll}}}\right)$$

Durch den vierten Pixelversatzterm kann somit auch für irreguläre Behälter unter Verwendung des im Zusammenhang mit der Figur 2 beschriebenen Druckmoduls 202 der Abstand der beiden nebeneinander angeordneten Druckdüsenreihen 209, 210 derart korrigiert werden, dass die durch die beiden Druckdüsenreihen ausgestoßenen Tintentropfen untereinander entlang einer Reihe auf der Behälteroberfläche auftreffen und eine Druckpunktreihe auf der Behälteroberfläche erzeugt wird, welche die doppelte Auflösung im Vergleich zu der Auflösung einer der beiden Druckdüsenreihen 209, 210 des Druckmoduls 202 aufweist. Somit lassen sich unerwünschte Verzerrungseffekte, welche durch den sich ändernden Ist-Durchmesser 107 im Druckbereich 112 hervorgerufen werden, verhindern und qualitativ hochwertige Druckbilder mit hoher Druckauflösung erzielt werden.

Die Ausführungsform der Figur 2 kann mit allen vorher beschriebenen Ausführungsformen beliebig kombiniert werden.

**Patentansprüche**

1. Direktdruckverfahren zum Bedrucken eines irregulären Behälters (106), wobei für einen Pixel einer Druckvorlage für ein Druckbild basierend auf einem Soll- (109) und einem Ist-Durchmesser (108) des zu bedruckenden Behälters (106) ein Pixelversatz bestimmt wird, wobei basierend auf dem bestimmten Pixelversatz eine korrigierte Druckvorlage erzeugt wird, wobei basierend auf der korrigierten Druckvorlage das Druckbild mittels einer Direktdruckvorrichtung (101) mit einer Vielzahl von Druckdüsen (103) auf den irregulären Behälter (106) aufgebracht wird.

2. Direktdruckverfahren nach Anspruch 1, wobei das Bestimmen des Pixelversatzes ein Bestimmen eines ersten Pixelversatzterms zur Korrektur einer Flugzeit eines von einer Druckdüse (103) ausgestoßenen Tintentropfens (105) umfasst.

3. Direktdruckverfahren nach Anspruch 2, wobei der erste Pixelversatzterm basierend auf einer Soll-Oberflächengeschwindigkeit des Behälters, einer Fluggeschwindigkeit des Tintentropfens (105) und einer Pixeldichte des Druckbildes bestimmt wird.

4. Direktdruckverfahren nach einem der Ansprüche 1 bis 3, wobei das Bestimmen des Pixelversatzes ein Bestimmen eines zweiten Pixelversatzterms zur Korrektur einer Fluggeschwindigkeitsänderung eines von einer Druckdüse (103) ausgestoßenen Tintentropfens (105) umfasst.

5. Direktdruckverfahren nach Anspruch 4, wobei der zweite Pixelversatzterm basierend auf einer Pixeldichte, einer Soll-Oberflächengeschwindigkeit des Behälters (106), einer Fluggeschwindigkeit des Tintentropfens (105) beim Austritt aus einer Druckdüse (103) und einer mittleren Geschwindigkeit des Tintentropfens (105) bestimmt wird.

6. Direktdruckverfahren nach einem der Ansprüche 1 bis 5, wobei das Bestimmen des Pixelversatzes ein Bestimmen eines dritten Pixelversatzterms zur Korrektur eines zusammensetzungsabhängigen Flugverhaltens eines von einer Druckdüse (103) ausgestoßenen Tintentropfens (105) umfasst.

7. Direktdruckverfahren nach Anspruch 6, wobei der dritte Pixelversatzterm basierend auf einem relativen zusammensetzungsabhängigen Korrekturfaktor und einem Verhältnis aus Soll-Durchmesser (109) und einem minimalen Durchmesser (107) des Behälters bestimmt wird.

8. Direktdruckverfahren nach einem der Ansprüche 1 bis 7, wobei die Druckdüsen (103) der Direktdruckvorrichtung (101) in wenigstens zwei in Druckrichtung nebeneinanderliegenden Druckdüsenreihen (209, 210) angeordnet sind und wobei das Bestimmen des Pixelversatzes ein Bestimmen eines vierten Pixelversatzterms zur Korrektur für eine Direktdruckvorrichtung (101, 200) mit wenigstens zwei nebeneinanderliegenden Druckdüsenreihen umfasst.

9. Direktdruckverfahren nach Anspruch 8, wobei der vierte Pixelversatzterm basierend auf einem Abstand (208) der Druckdüsenreihen bestimmt wird.

10. Direktdruckverfahren nach einem der Ansprüche 1 bis 9, wobei die Druckvorlage vor Bestimmen des Pixelversatzes in verschiedene Farb-Layer aufgeteilt wird und der Pixelversatz für jedes Farb-Layer separat bestimmt wird.

11. Direktdruckverfahren nach Anspruch 10, wobei basierend auf den bestimmten Pixelversätzen für jedes Farb-Layer eine korrigierte Druckvorlage bestimmt wird.

12. Direktdruckvorrichtung zum Bedrucken von irregulären Behältern (106), wobei die Direktdruckvorrichtung (101) ein Druckmodul (102, 202) mit einer Vielzahl von Druckdüsen (103, 204, 205) und eine Steuereinheit (104) umfasst, wobei die Steuereinheit (104) ausgebildet ist das Verfahren nach einem der Ansprüche 1 bis 11 durchzuführen.

100

101

103

102

105

104

113

110

111

109

108

112

107

106

FIG. 1

200

204 203

202

207

201

205

206

209 208 210

FIG. 2

Europäisches
Patentamt

European
Patent Office

Office européen
des brevets

# EUROPÄISCHER RECHERCHENBERICHT

Nummer der Anmeldung

EP 24 16 6108

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/204135 A1 (FISCHER JOERG-ACHIM [DE]) 24. Juli 2014 (2014-07-24) * Absätze [0028], [0030]; Abbildung 1 * ----- | 1-12 | INV. B41J3/407 G06F3/12 B41M5/00 |
| X | EP 2 591 917 A1 (KRONES AG [DE]) 15. Mai 2013 (2013-05-15) * Abbildungen 1-6 * ----- | 1-12 | |
| X | US 2011/146880 A1 (KRAEMER KLAUS [DE] ET AL) 23. Juni 2011 (2011-06-23) * Absätze [0020], [0039]; Abbildungen 3, 4, 5 * ----- | 1-12 | |

RECHERCHIERTE
SACHGEBIETE (IPC)

B41J
G06F
B41M

Der vorliegende Recherchenbericht wurde für alle Patentansprüche erstellt

| Recherchenort | Abschlußdatum der Recherche | Prüfer |
|---|---|---|
| Den Haag | 19. August 2024 | Loi, Alberto |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 6108

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-08-2024

| Im Recherchenbericht angeführtes Patentdokument | Datum der Veröffentlichung | Mitglied(er) der Patentfamilie | Datum der Veröffentlichung |
|---|---|---|---|
| US 2014204135 A1 | 24-07-2014 | CN 103935136 A | 23-07-2014 |
| | | DE 102013000888 A1 | 24-07-2014 |
| | | EP 2756956 A1 | 23-07-2014 |
| | | JP 6226754 B2 | 08-11-2017 |
| | | JP 2014136217 A | 28-07-2014 |
| | | US 2014204135 A1 | 24-07-2014 |
| EP 2591917 A1 | 15-05-2013 | CN 103144442 A | 12-06-2013 |
| | | DE 102011086015 A1 | 16-05-2013 |
| | | EP 2591917 A1 | 15-05-2013 |
| US 2011146880 A1 | 23-06-2011 | DE 102008051791 A1 | 22-04-2010 |
| | | EP 2349850 A1 | 03-08-2011 |
| | | US 2011146880 A1 | 23-06-2011 |
| | | WO 2010043330 A1 | 22-04-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017215429 A1